# EUROPEAN PATENT SPECIFICATION

(11) **EP 3 193 043 B1**
(45) Date of publication and mention of the grant of the patent: **04.11.2020**
(21) Application number: 17151504.2
(22) Date of filing: 13.01.2017
(51) Int. Cl.: F16H 48/06, F16H 48/08

(54) **METHOD OF RETROFITTING REPLACEMENT SIDE GEARS TO A DIFFERENTIAL ASSEMBLY**
VERFAHREN ZUM AUSWECHSELN VON ZAHNRÄDER EINER DIFFERENZIALANORDNUNG
MÉTHODE DE REMPLACEMENT DE ROUES DENTÉES D'UN ENSEMBLE DIFFÉRENTIEL

(30) Priority: 15.01.2016 GB 201600813
(43) Date of publication of application: 19.07.2017
(73) Proprietor: Ford Global Technologies, LLC, Dearborn, MI 48126 (US)
(72) Inventor: WALTER, Alan Jamal, Benfleet, Essex SS7 4DE (GB); DAUBNEY, Richard Mark, West Malling, Kent ME19 5LZ (GB)
(74) Representative: Haseltine Lake Kempner LLP

(56) References cited:
- EP-A1- 0 730 109
- DE-A1-102008 017 221
- US-A- 2 408 926
- US-A- 4 715 248

## Description

### Technical Field

This disclosure relates generally to a differential assembly for a drive train of a vehicle and particularly, although not exclusively, relates to a differential assembly comprising stub shafts that extend beyond a casing of the differential.

### Background

A vehicle differential assembly of the related art is known from DE 10 2008 017221 A1. In a front wheel drive motor vehicle, a driveshaft currently enters a transmission assembly to connect to the differential assembly. Such an arrangement requires the driveshaft and transmission assembly to form a seal to retain transmission fluid within the transmission assembly. However, before the driveshaft is installed or if the driveshaft is subsequently removed, the seal is broken.

It is desirable to provide a differential and driveshaft design that would reliably inhibit the leakage of transmission fluid upon removal of driveshafts from the differential at all stages of the vehicle life-cycle.

### Statements of Invention

According to the present disclosure, there is provided a method of retrofitting replacement side gears to a vehicle differential as set out in claim 1 below.

The existing differential assembly may comprise side gears, which do not comprise respective stub shafts that extend beyond the carrier. Optional features of the disclosure we set out in the dependent claims below.

Each drive shaft may comprise an opening at one end. The opening may comprise radially internal splines to engage the radially external splines of the respective stub shafts. Alternatively, the drive train assembly may further comprise a pair of sleeves. Each sleeve may comprise first and second ends each with radially internal splines. The first ends may be configured to engage the radially external splines of respective stub shafts and the second ends may be configured to engage radially external splines at ends of the drive shafts. An outer diameter of the stub shafts may be substantially equal to or less than an outer diameter of the drive shafts.

A vehicle may comprise the above-mentioned vehicle differential assembly or the above-mentioned drive train assembly.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:
Figure 1, is an exploded view of a differential assembly for a vehicle according to an arrangement of the present disclosure (the external housing has been omitted);
Figure 2 is a perspective assembled view of the differential assembly for a vehicle according to the arrangement of the present disclosure (the external housing has been omitted);
Figure 3 is a partial sectional view of the differential assembly for a vehicle according to the arrangement of the present disclosure;
Figure 4 is a side view of a side gear of the differential assembly for a vehicle according to the arrangement of the present disclosure; and
Figures 5a and 5b are partial sectional views of the differential assembly for a vehicle according to the arrangement of the present disclosure with Figure 5a showing the differential assembly coupled directly to a drive shaft and Figure 5b showing the differential assembly coupled to the drive shaft via a sleeve.

### Detailed Description

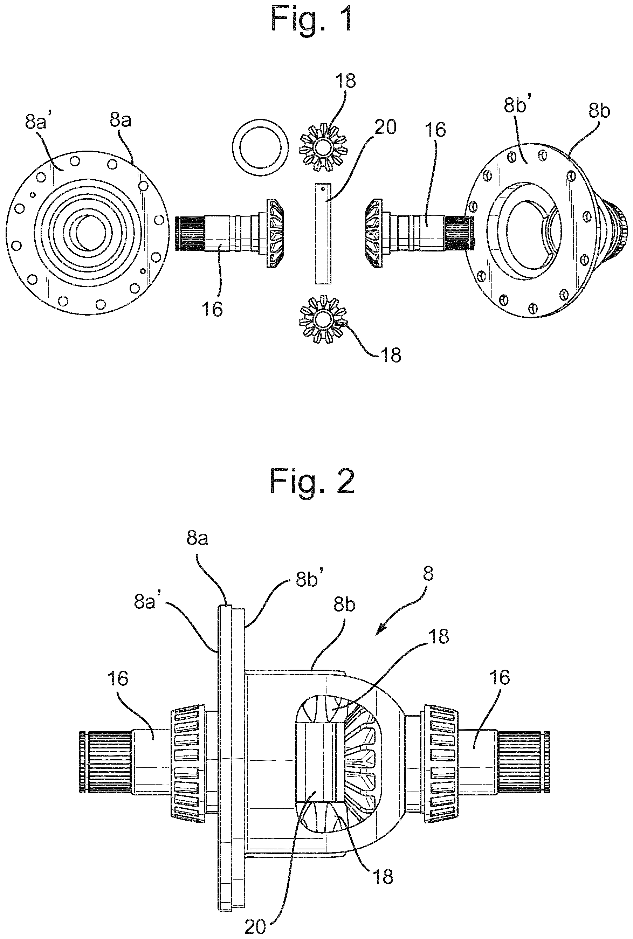

With reference to Figures 1 to 3, a differential assembly 2 for a vehicle, such as a motor vehicle, may comprise a differential housing 4, a carrier 8, a pair of side gears 16 rotatably coupled to the carrier 8 and one or more pinion gears 18. The differential assembly 2 may further comprise a drive gear 6 coupled to the carrier 8.

The carrier 8 is provided within and rotatably coupled to the housing 4. The differential assembly 2 may further comprise one or more bearings 10 configured to support the carrier 8 within the differential housing 4 and allow the carrier 8 to rotate within the differential housing when driven via the drive gear 6.

The differential housing 4 may be at least partially filled with oil, provided to lubricate the moving components of the differential assembly 2. Hence, the differential assembly 2 may further comprise one or more seals 12. The seals may be provided between the differential housing 4 and the carrier 8. The seals 12 may be configured to prevent oil from leaking out of the differential assembly 2.

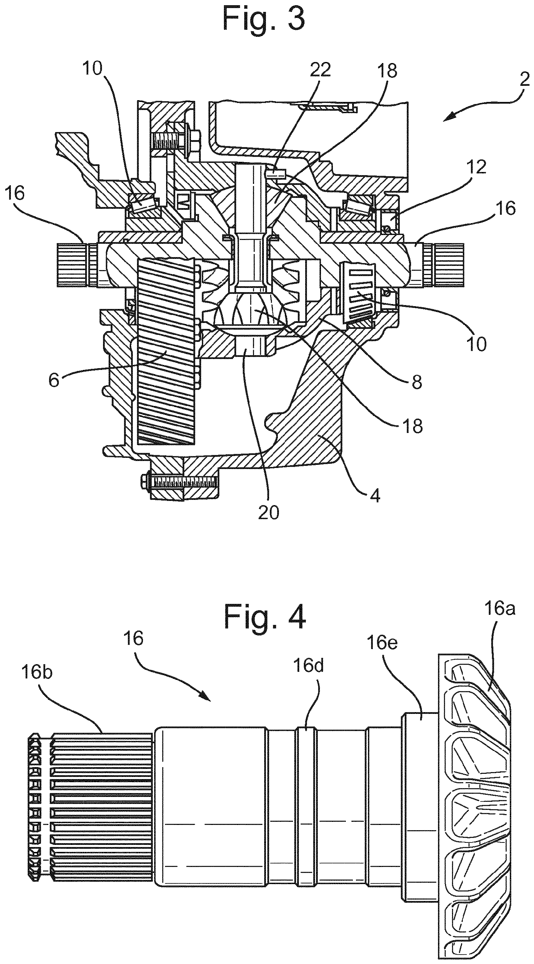

With reference to Figure 1, the carrier 8 may comprise a base portion 8a and a carrier portion 8b. Each portion 8a, 8b may comprise a respective flange 8a', 8b' and the base portion 8a and carrier portion 8b may be configured to couple together at their respective flanges 8a', 8b' when the differential assembly 2 is assembled. As shown in Figure 3, the flange 8a', 8b' provided on the base portion 8a and/or the carrier portion 8b, may be configured to couple to the drive gear 6. Alternatively, the drive gear 6 may be configured to couple to the carrier 8 at another location or may be integral with the carrier 8.

As shown in Figure 1, the differential assembly 2 may comprise two pinion gears 18. The pinion gears 18 are pivotally, e.g. rotatably, coupled to the carrier 8. As shown in Figures 1 and 2, the differential assembly 2 may comprise a pinion shaft 20 supported within the carrier 8, e.g. within the carrier portion 8b of the carrier. The pinion gears 18 may be rotatably mounted to the pinion shaft 20, e.g. the pinion gears may be rotatable relative to the pinion shaft 20. Alternatively, one of the pinion gears 18 may be coupled to the pinion gear shaft 20 and configured to rotate together with the pinion gear shaft 12 relative to the carrier 8. As shown in Figure 3, the differential assembly 2 may comprise a pinion shaft pin 22, configured to prevent rotation of the pinion shaft 20 relative to the carrier 8. Although two pinion gears 18 are shown, one of the pinion gears may be omitted.

The two side gears 16 are rotatably supported by the base portion 8a of the carrier and the carrier portion 8b of the carrier respectively. The side gears 16 are configured to rotate about an axis, which is at an angle relative to a central axis of the pinion shaft 20. For example, as shown in Figures 2 and 3, the side gears may be configured to rotate about an axis perpendicular to the central axis of the pinion shaft. As depicted, both of the side gears 16 may be configured to rotate about the same axis. However, it is equally envisaged that the side gears 16 may be configured to rotate about different axes to each other. The different axes may be arranged at an angle relative to each other. The side gears 16 are configured to meshingly engage with the pinion gears 18.

As shown in Figure 4, each of the side gears 16 comprises a stub shaft 16b integrally formed with a gear portion 16a of the side gear. The gear portion 16a may be formed at a proximal end of the stub shaft 16b. The stub shafts 16b are configured to extend from the gear portion 16a to a distal end of the stub shaft 16b. As shown in Figures 2 and 3, when the differential assembly 2 is assembled, the distal ends of the stub shafts 16b extend beyond, e.g. outside of, the carrier 8.

As depicted in Figure 3, the carrier 8, e.g. the base portion 8a and the carrier portion 8b of the carrier, may extend up to an outer surface of the differential housing 4. Hence, as the stub shafts 16b extend beyond the carrier 8, the stub shafts 16b also extend beyond the housing 4. In other arrangements (not shown), the carrier 8 may not extend up to the outer wall of the housing 4, or may extend beyond the outer wall. However, the stub shaft may continue to extend beyond the carrier 8 and the housing 4, e.g. beyond the outer surface of the housing 4.

With reference to Figure 4, the stub shaft 16b may be a solid shaft. The stub shaft 16b comprises a torque transfer feature, such as a spline 16c, provided at the distal end of the stub shaft 16b. As shown in Figure 4, the spline 16c is an external, e.g. radially external, spline formed in an outer surface of the stub shaft 16b. As depicted, an outer radius of the spline 16c may be substantially equal to an outer radius of the stub shaft 16b. However, it is equally envisaged that the outer radius of the spline 16c may be less than the outer radius of the stub shaft 16b.

The stub shaft 16b may comprise one or more sealing surfaces 16d, which may allow seals (not shown) to be provided between the stub shaft 16b and the carrier 8 and/or the housing 4. As the stub shafts 16b are solid shafts, sealing between the stub shafts 16b and the carrier 8, and/or the housing 4 at the sealing surfaces 16d, may prevent oil leaking from the differential assembly 2 at the stub shaft 16b.

The stub shaft 16b may further comprise one or more bearing surfaces 16e, configured to engage with internal surfaces of one or more bearings, such as ball bearings, roller bearings or needle bearings, which may be provided on the carrier 8. In some arrangements, the bearing may comprise a journal bearing formed between the bearing surfaces 16e of stub shaft 16b and one or more corresponding bearing surfaces of the carrier 8. Hence, the bearing surface 16e may be configured to interface with the corresponding bearing surface of the carrier 8.

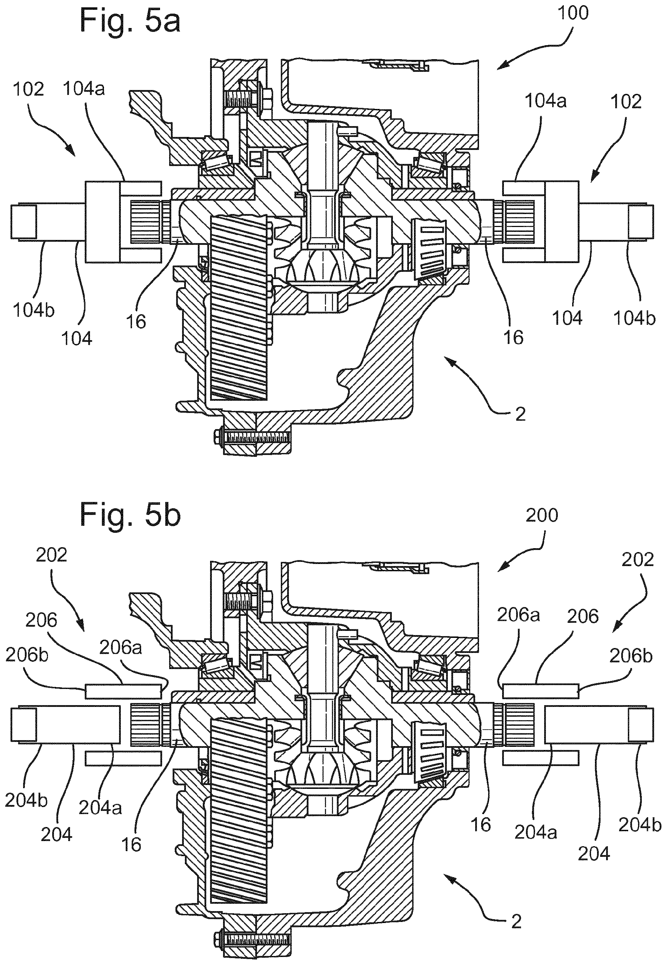

With reference to Figures 5a and 5b, a drive train assembly 100, 200 for a motor vehicle, according to arrangements of the present disclosure, may comprise the differential assembly 2 and a pair of drive shaft assemblies 102, 202. The drive shaft assemblies 102 202, may each comprise a drive shaft 104, 204 including a coupling portion 104a, 204a, formed at a proximal end of the drive shaft, and a shaft portion 104b, 204b extending from the coupling portion 104a, 204a to a distal end of the drive shaft. The coupling portion 104a, 204b may define a torque transfer feature.

As shown in Figure 5a, each of the drive shafts 104 may comprise an opening at the distal end of the drive shaft, e.g. on the coupling portion 104a. The torque transfer feature may comprise an internal spline, e.g. a radially internal spline, provided on an inner surface of the opening. Each of the shafts 104, e.g. the coupling portions of each of the drive shafts, may be configured to couple, e.g. directly couple, with the stub shafts 16a of the differential assembly 2. For example, as shown in Figure 5a, the splines 16c formed on the distal ends of the stub shafts 16b may be at least partially received within the openings of the coupling portions 104a and may engage with the coupling portions 104a.

The shaft portion 104b of the drive shafts may have substantially the same diameter as the stub shafts 16a. Hence, the coupling portion 104a of each of the drive shafts may have a greater diameter than the shaft portion 104b. In an alternative arrangement (not shown) the shaft portion 104b may have substantially the same diameter as the coupling portion 104a, e.g. the shaft portion 104b may have a greater diameter than the stub shaft 16b.

As shown in Figure 5b, the torque transfer feature of the coupling portion 204b, may comprise an external spline, e.g. a radially external spline. As described above, the stub shafts 16b also comprise an external spline and hence, the drive train assembly 200 may further comprise a pair of sleeves 206. The sleeves 206 are provided with internal, e.g. radially internal, splines configured to engage to the drive shaft 204 and the stub shaft 16b and thereby transfer torque between each of the stub shafts 16b and the respective drive shafts 204.

In the arrangement shown in Figure 5b, a first end 206a of the sleeve is provided with a first spline configured to engage with the stub shaft 16b and a second end 206b of the sleeve is provided with a second spline configured to engage with the drive shaft 204. The diameters of the first and second splines may be different. Alternatively, the diameters of the first and second splines may be the same. In this case, a single spline may be provided which extends substantially the full length of the sleeve 206, e.g. from the first end 204a to the second end 204b, and is configured to engage the drive shaft 204 and the stub shaft 16b.

In each of the arrangements shown in Figures 5a and 5b, a central axis of each of the drive shafts 104, 204 may be aligned with the central axis of the stub shaft 16b with which the drive shaft is engaged.

As the stub shafts 16b extend beyond the carrier 8 and the housing 4 of the transmission system 2, the full length of the drive shafts 104, 204 may be provided outside of, e.g. external to, the housing 4 of the differential assembly 2. Hence, it may not be necessary to seal between the drive shafts and the carrier 8 and/or housing 4 in order to prevent oil within the transmission system 2 leaking out of the housing 4.

During maintenance or repair of the vehicle, it may be necessary to disassemble the drive train assembly 100, 200 and/or remove the drive shafts 104, 204 from the drive train assembly. As the drive shafts are provided outside of the housing 4, removing the drive shaft 104, 204 may not disrupt the sealing of the differential assembly 2.

In order to provide this advantage to existing vehicles, e.g. such that the drive shafts may be removed during future maintenance or repair without disrupting the sealing of the differential assembly, the side gears 16 comprising the stub shafts 16b are configured to be retrofitted into an existing differential assembly, which may have been previously assembled onto an existing motor vehicle.

A method of retrofitting a vehicle differential assembly, according to arrangements of the present disclosure comprises at least partially disassembling an existing differential assembly, e.g. of the existing vehicle, and removing one or more existing side gears. The method further comprises retrofitting the vehicle differential assembly to provide a pair of side gears, e.g. further side gears, that are integrally formed with respective stub shafts that extend beyond both the carrier and casing. The side gears retrofitted to the existing differential assembly may comprise the features described above with reference to Figure 1 to 5b.

In order to allow the side gears 16 to be retrofitted to the existing differential assembly, the bearing surfaces 16e of the stub shafts 16b of the side gears may be configured to interface with corresponding bearing surfaces provided on the existing differential assembly, e.g. to form a journal bearing. Additionally or alternatively, the bearings surfaces 16e may be configured to interface with the inner surfaces of one or more existing bearings provided in the existing differential assembly.

It will be appreciated by those skilled in the art that although the invention has been described by way of example, with reference to one or more examples, it is not limited to the disclosed examples and alternative examples may be constructed without departing from the scope of the invention as defined by the appended claims.

## Claims

1. A method of retrofitting replacement side gears (16) to a vehicle differential assembly, the vehicle differential assembly (2) comprising:
a casing (4);
a rotatable carrier (8) provided within the casing (4); and
a pair of side gears (16) that are received in the carrier (8) and meshingly engage one or more pinion gears (18) rotatably coupled to the carrier (8), the method comprising:
at least partially disassembling the differential assembly (2) and removing the existing side gears (16); and
retrofitting the vehicle differential assembly (2) with a pair of replacement side gears (16) that are integrally formed with respective stub shafts (16b) that extend beyond both the carrier (8) and casing (2), the stub shafts (16b) comprising radially external splines (16c) that are configured to engage respective drive shaft assemblies (102, 202).

2. The method as claimed in claim 1, wherein bearings surfaces of the stub shafts of the replacement side gears are configured to interface with the inner surfaces of one or more bearings provided in the differential assembly.

3. The method as claimed in claim 2, wherein an outer radius of the splines is less than or substantially equal to an outer radius of the stub shaft on which the splines are formed.

4. The method as claimed in any of the preceding claims, wherein the stub shafts comprise surfaces for sealing against at least one of the carrier and casing.

5. The method as claimed in any of the preceding claims, wherein at least one of the stub shafts is solid.

6. The method as claimed in any of the preceding claims, wherein at least one of the stub shafts is hollow.

## Patentansprüche

1. Verfahren um Ersatz-Achswellenkegelräder (16) der Differentialgetriebeanordnung eines Fahrzeugs nachzurüsten, wobei die Differentialgetriebeanordnung eines Fahrzeugs umfasst:
ein Gehäuse (4);
einen im Gehäuse (4) vorgesehenen drehbaren Träger (8); und
ein im Träger (8) aufgenommenes Achswellenkegelradpaar (16), das in ein oder mehrere mit dem Träger (8) drehbar gekoppelte Ritzel (18) eingreift, wobei das Verfahren umfasst:
die Differentialgetriebeanordnung 2) zumindest teilweise zerlegen und die vorhandenen Achswellenkegelräder 16) ausbauen; und
die Differentialgetriebeanordnung eines Fahrzeugs (2) mit einem Ersatz-Achswellenkegelradpaar (16) nachrüsten, das vollständig mit entsprechenden Wellenstümpfen (16b) ausgebildet ist, die sowohl über den Träger (8) als auch über das Gehäuse (2) hinausragen, wobei die Wellenstümpfe (16b) außen radiale Keilnuten (16c) umfassen, die dafür ausgelegt sind, in die entsprechenden Antriebswellenanordnungen (102, 202) einzugreifen.

2. Verfahren gemäß Anspruch 1, wobei Auflagerflächen der Wellenstümpfe der Ersatz-Achswellenkegelräder so konfiguriert sind, dass sie die Innenflächen eines oder mehrerer in der Differentialgetriebeanordnung vorgesehenen Lager berühren.

3. Verfahren gemäß Anspruch 2, wobei ein Außenradius der Keilnuten kleiner oder im Wesentlichen gleich dem Wellenstumpf-Außenradius ist, auf dem die Keilnuten ausgebildet sind.

4. Verfahren gemäß einem der vorhergehenden Ansprüche, wobei die Wellenstümpfe Oberflächen umfassen, die dem Abdichten gegenüber Träger und/oder Gehäuse dienen.

5. Verfahren gemäß einem der vorhergehenden Ansprüche, wobei mindestens einer der Wellenstümpfe massiv ausgebildet ist.

6. Verfahren gemäß einem der vorhergehenden Ansprüche, wobei mindestens einer der Wellenstümpfe hohl ausgebildet ist.

## Revendications

1. Un procédé de rénovation des engrenages latéraux de rechange (16) sur un ensemble différentiel de véhicule, l'ensemble différentiel de véhicule (2) comprenant :
un boîtier (4) ;
un support rotatif (8) prévu à l'intérieur du boîtier (4) ; et
une paire d'engrenages latéraux (16) qui sont reçus dans le support (8) et s'engrènent avec un ou plusieurs engrenages à pignons (18) couplés de manière rotative au support (8), le procédé comprenant :
le désassemblage au moins partiel de l'ensemble différentiel (2) et le retrait des engrenages latéraux existants (16) ; et
la rénovation de l'ensemble différentiel de véhicule (2) avec une paire d'engrenages latéraux de rechange (16) qui sont formés d'un seul bloc avec des faux arbres respectifs (16b) qui s'étendent à la fois au-delà du support (8) et du boîtier (2), les faux arbres (16b) comprenant des cannelures externes radialement (16c) qui sont configurées pour engager des ensembles d'arbres d'entraînement respectifs (102, 202).

2. Le procédé selon la revendication 1, dans lequel les surfaces de roulements des faux arbres des engrenages latéraux de rechange sont configurées pour s'interfacer avec les surfaces intérieures d'un ou plusieurs roulements prévus dans l'ensemble différentiel.

3. Le procédé selon la revendication 2, dans lequel un rayon extérieur des cannelures est inférieur ou sensiblement égal à un rayon extérieur du faux arbre sur lequel sont formées les cannelures.

4. Le procédé selon l'une quelconque des revendications précédentes, dans lequel les faux arbres comprennent des surfaces pour assurer l'étanchéité contre au moins l'un parmi le support et le boîtier.

5. Le procédé selon l'une quelconque des revendications précédentes, dans lequel au moins l'un des faux arbres est solide.

6. Le procédé selon l'une quelconque des revendications précédentes, dans lequel au moins l'un des faux arbres est creux.
